Europäisches Patentamt

European Patent Office

Office européen des brevets

(11) Publication number: **0 376 277**
**A2**

(12) # EUROPEAN PATENT APPLICATION

(21) Application number: **89123997.2**

(22) Date of filing: **27.12.89**

(51) Int. Cl.5: **B02B 5/00**

(30) Priority: **29.12.88 IT 2313888**

(43) Date of publication of application:
**04.07.90 Bulletin 90/27**

(84) Designated Contracting States:
**AT BE CH DE ES FR GB GR IT LI LU NL SE**

(71) Applicant: **Verga Falzacappa, Ranieri**
**Via Visnadello, 2**
**I-31020 San Vendemiano(Treviso)(IT)**

(72) Inventor: **Verga Falzacappa, Ranieri**
**Via Visnadello, 2**
**I-31020 San Vendemiano(Treviso)(IT)**

(74) Representative: **Moretti, Giorgio et al**
**Notarbartolo & Gervasi s.r.l. Viale Bianca**
**Maria, 33**
**I-20122 Milano(IT)**

(54) **Apparatus and process for the production of broken and partially fermented wheat kernels for direct alimentary use.**

(57) The apparatus comprises a cover (1), in which motor (2) is installed, a hopper (4) for feeding the wheat, a second hopper (6) for feeding water, a container (14) and a device (12) for timing the process. The preparation of the broken and partially fermented wheat kernels is carried out taking the kernels from hopper (4) to hopper (6) where they are kept to partially germinate, the wheat kernels being then broken up in (10) and (11) and finally partially fermented and pasteurized in container (14). The obtained product contains all the grain components and may be used directly in human alimentation.

FIG 1

EP 0 376 277 A2

# APPARATUS AND PROCESS FOR THE PRODUCTION OF BROKEN AND PARTIALLY FERMENTED WHEAT KERNELS FOR DIRECT ALIMENTARY USE

## FIELD OF THE INVENTION

The present invention relates to an apparatus and a process for the preparation of broken and partially fermented wheat kernels containing all the wheat components and suitable for human alimentation.

## PRIOR ART

As known, wheat is universally employed, after milling, for obtaining basic products for human alimentation such as bread and pasta.

The process, however, brings about the loss in the milling and sifting steps of more than 50% of the total substance.

Notably, a considerable amount of aminoacids, salts and vitamins contained in the wheat embryo and pericarp may get lost.

As an example, only about 7% of the vitamins and 0.6% of the mineral salts contained in wheat remains in the flour.

Thus considerable amounts of substances which are essential for nutrition and body health get lost, with serious biologic and economic damages.

On the other hand, whole wheat kernels as such cannot be utilized at the intestine level.

The problem exists therefore of transforming the kernels to make them available at the intestine level while allowing the complete utilization of all its components.

## SUMMARY OF THE INVENTION

We have now found an apparatus and a process which allow to trasform wheat kernels into a product usable at the intestine level, which product contains all the wheat substance and may be used directly in human alimentation.

Said apparatus consists of a cover 1, a first hopper 4, a second hopper 6, a container 14 and a device 12 for timing the process, and is characterised in that said cover contains a motor 2, which drives the turning parts of the apparatus and raises plug 9, said hopper 4 presenting a sectional valve 5, said hopper 6 presenting a scraper 8 and a plug 9, in that in the passage between said hopper 6 and said container 14 are located the devices 10 and 11 or, alternatively 21, 22, 23, for breaking up the kernels, in that said container 14 presents a stirrer 13 and an outside electric heating device 13 and in that the coupling of the motor shaft allows to stop the rotation of the underlying shaft for a fraction of the engine rotation.

Said process is characterized in that:

a) wheat kernels are passed from hopper 4 to hopper 6 containing water, and are kept in said hopper 6 to partially germinate;

b) plug 9 is raised and the water is collected in container 14 while the wheat kernels are broken up by devices 10,11 or by devices 21, 22, 23 and collected in the same container 14;

c) the mixture collected according to b) is kept in container 14 to partially ferment; and

d) the mixture obtained according to c) is pasteurized.

## DETAILED DESCRIPTION OF THE INVENTION

The characteristics and advantages of the apparatus and of the process according to the invention will be letter illustrated in the following detailed description, with reference also to the enclosed drawings, which relate to preferred embodiments of the invention and are reported to illustrate the invention without any limitation of it.

In the drawings:

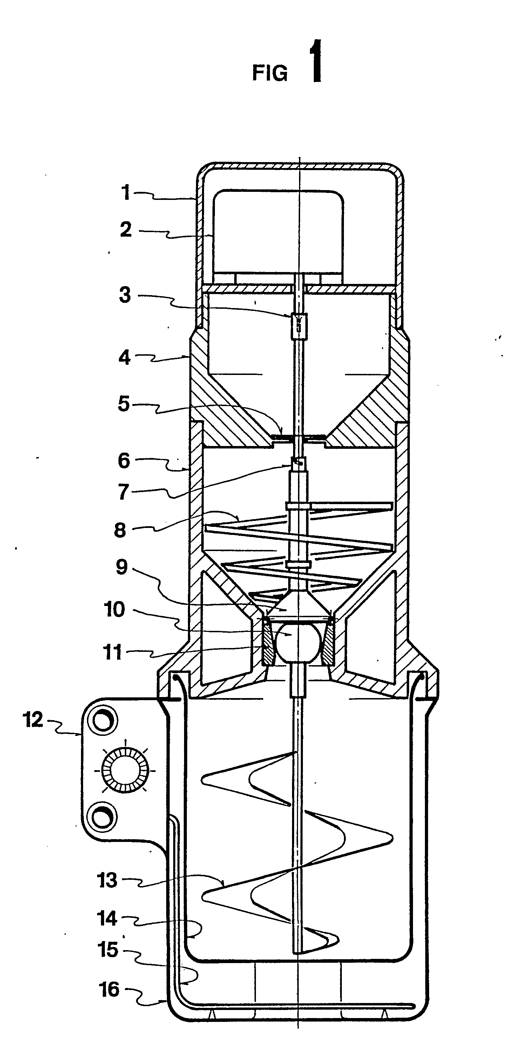

Fig. 1 is a general view of the invention apparatus while

Figs. 2 to 8 show details of some of the elements of the apparatus. In particular,

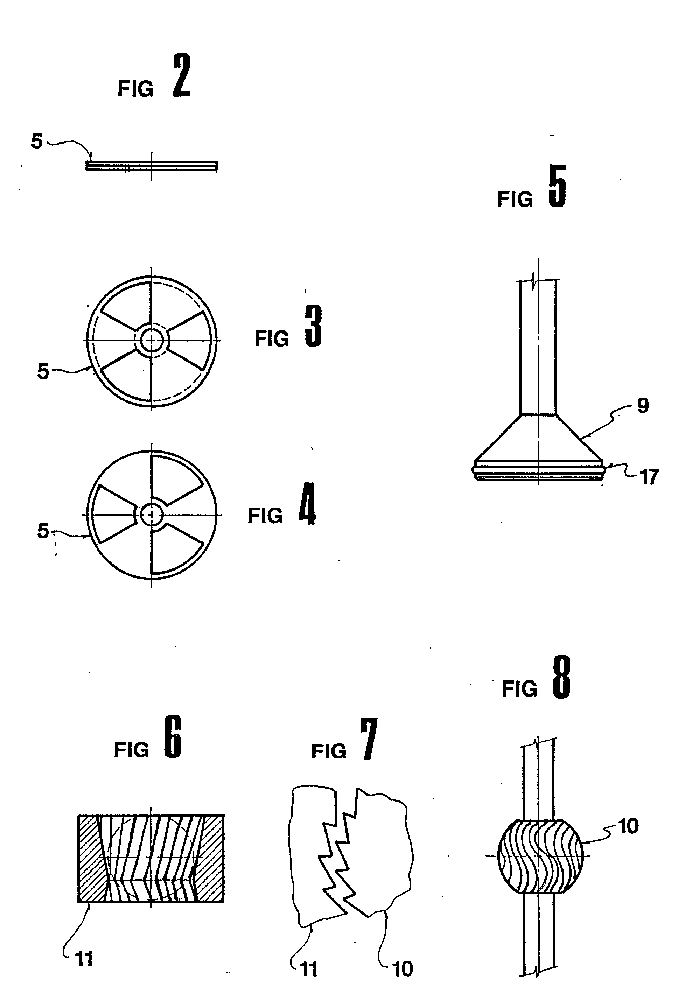

Figs. 2, 3 and 4 show sectional valve 5,

Fig. 5 illustrates plug 9, and

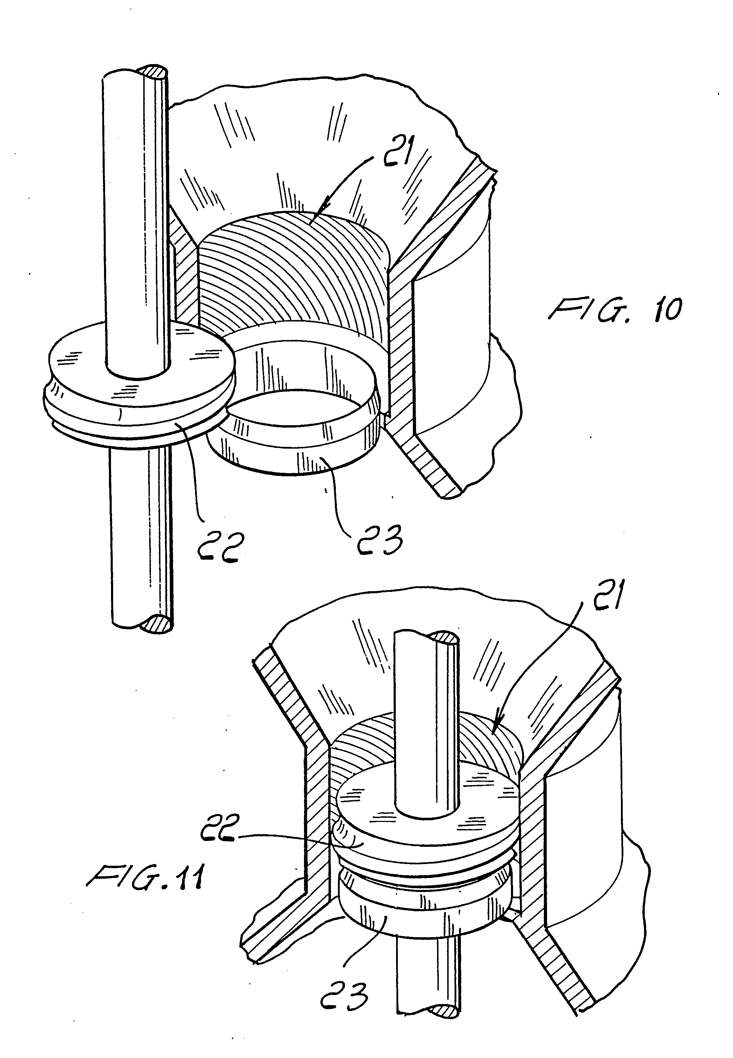

Figs. 6, 7, 8 and 9, 10, 11 illustrate devices 10, respectively devices 21, 22, 23 11 for breaking up the kernels.

Referring now to the numeric symbols in the figures, the apparatus according to the invention consists essentially of four sections which can be manually assembled and disassembled, and precisely of a cover 1, a first hopper 4, a second hopper 6 and a container 14.

In cover 1 an electric motor 2 is installed which drives all the turning elements of the apparatus, namely valve 5 and scraper 8, the devices for breaking up the wheat kernels and stirrer 13.

Motor 2 also provides for raising plug 9 which is screwed on the shaft. The device for breaking up the kernels consists of a revolving part 10 and a fixed part 11. Part 10 consists of a steel ball the surface of which presents "S" shaped grooves of 1-2 mm depth, while part 11 has the same grooves albeit in opposite direction.

Between 10 and 11 there is a slight clearance to let the broken kernels through.

The apparatus also presents a case 16 in which an electric resistance for heating container 14 and a device 12 for timing the operations are contained.

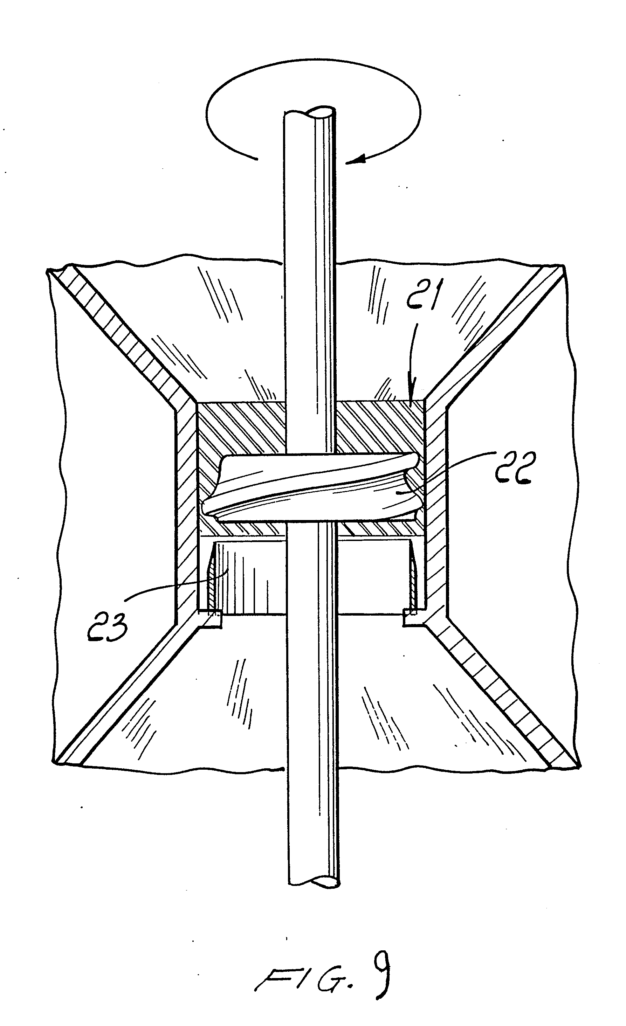

An alternative structure for breaking the kernels, in substitution of devices 10 and 11, is represented in figures 9, 10 and 11.

It consists of a cylinder 21, of a screw 22 turning inside said cylinder and of a second inside cylinder 23 of a smaller diameter resting at the bottom of cylinder 21 and having a sharp upper edge.

Cylinder 21 shows on its internal surface a fine multiple thread. The screw groove, has the dimension of the kernels, i.e. 3 to 4 mm, its cross section shows a recess in its hopper part and a slant toward the bottom of the cylinder 21 in its lower part.

By means of this structure the kernels are pushed by screw 22 against the cutting edge of cylinder 23 and cut in halves.

The described apparatus is used for preparing the broken and partially fermented wheat kernels suitable for direct consumption in human alimentation.

The preparation is carried out as follows:
- water is fed manually into hopper 6, plug 9 being closed, sealing being ensured by gasket 17;
- wheat is manually fed into hopper 4, valve 5 being closed;
- cover 1 with engine 2 is put on;
- the time program is established by means of device 12, according to personal or family needs;
- at the time set for starting automatic operations, the motor makes one sixth of a turn opening valve 5 and thus allowing wheat to pass from hopper 4 to hopper 6. In this phase coupling 7 allows to exclude rotation of the underlying shaft, while at the same time the shaft is hooked up on the coupling;
- wheat remains soaked in hopper 6 for the time programmed, between 2 and 6 hours, at room temperature. In this phase, partial germination takes place.
- motor 2 is then started, which raises plug 9 and puts scraper 8, device 10 and stirrer 13 in rotation. Water is collected in container 14 while the kernels scraped by 8 pass to breaking device 10,11, or alternatively 21,22,23 are broken in two parts and fall into the same container 14;
- the broken kernels collected in container 14 together with water are kept under stirring for 4 to 6 hours at room temperature to promote partial fermentation and finally the mixture undergoes pasteurization at 75-80° C for 1-5 minutes.

The thus obtained product has a gel appearence and is ready for consumption in human alimentation.

The apparatus is preferably made out of heat-resistant glass; however, other materials may be employed, such as ceramic materials, stainless steel, enamelled steel, aluminum etc..

The product thus obtained presents many advantages of an economical and biological character; in fact the partially germinated and partially fermented wheat kernels are utilized with their whole contents of vitamins, proteins, mineral salts and carbohydrates.

The invention apparatus shows furthermore the advantage that the possibility of feeding separately wheat and water in hopper 4 and hopper 6 respectively allows to time the process according to a program suited to personal or familial needs, by means of the instruments which are comprised in the apparatus.

## Claims

1. Apparatus for preparing broken and partially fermented wheat kernels suitable for direct use in human alimentation, comprising a cover (1), a first hopper (4), a second hopper (6), a container (14) and a device (12) for timing the operations, characterized in that said cover (1) contains motor (2) which drives the rotating parts of the apparatus and raises plug (9), in that said hopper (4) is fitted with valve (5), the hopper being provided with scraper (8) and plug (9), in that in the passage from said hopper (6) to said container (14) are located devices (10 - 11) or alternatively (21, 22, 23) for breaking up the wheat kernels, in that said container (14) is fitted with a stirrer (13) and with an outside electric resistance for heating purposes and in that coupling (7) of the motor shaft allows to exclude the rotation of the underlying shaft for a fraction of a turn.

2. Apparatus according to claim 1, characterized in that said rotatable parts of the apparatus are: valve (5), scraper (8), device (10), screw (22) and stirrer (13).

3. Apparatus according to claim 1, characterized in that said valve (5) is a sectionl gate valve.

4. Apparatus according to claim 1, characterized in that said plug (9) is connected to the motor shaft by screwing.

5. Apparatus according to claim 1, characterized in that said device (10) is revolving and consists of a steel ball the surface of which presents "S" shaped grooves of 1-2 mm depth and that said device (11) is fixed and presents the same type of grooves as device (10) but in an opposite direction.

6. Apparatus according to claim 1, characterized in that said device (22) is a screw turning inside a cylinder (21), a second inside cylinder (23), of a smaller diameter and having a sharp upper edge, resting at the bottom of said first cylinder.

7. Apparatus according to claim 1, characterized in that said fraction of a turn of the shaft is one sixth.

8. Apparatus according to claim 1, characterized in that said device (12) initiates at pre-established times the following sequence of events:
motor (2) is set in motion to turn of one sixth of a turn so as to open sectional valve (5);
plug (9) is raised;
scraper (8), device (10) or alternatively screw (22), stirrer (13) start rotating;
heating by means of resistance (15) is started.

9. Process for the preparation of broken and partially fermented wheat kernels suitable for direct alimentary use characterized by the following, time programmed steps:

a) wheat kernels are passed from hopper (4) to hopper (6) containing water and kept there to partially germinate;

b) plug (9) is raised, whereby water collects in container (14) while the wheat kernels are broken by device (10-11) or alternatively (21, 22, 23) and collected also in container (14);

c) water and broken wheat kernels are kept in container (14) for a partial fermentation;

d) pasteurization of product obtained under c).

10. Process according to claim 9, characterized in that the water to wheat kernels ratio is between 2:1 and 3:1.

11. Process according to claim 8, characterized in that said partial germination of step a) takes place at room temperature in 2 to 6 hours time.

12. Process according to claim 9, characterized in that in step b) the wheat kernels are split along their longitudinal groove.

13. Process according to claim 9, characterized in that said partial fermentation in step c) takes place at room temperature for 4 to 6 hours under stirring.

14. Process according to claim 9, characterized in that said pasteurization in step c) takes place at 75-80° C for 5 to 10 minutes under stirring.

15. Broken, partially fermented and gelled wheat kernels obtained according to the process of claims 9 to 13.

FIG 1

FIG 2

FIG 3

FIG 4

FIG 5

FIG 6

FIG 7

FIG 8

FIG. 9

FIG. 10

FIG. 11